# EUROPEAN PATENT APPLICATION

(11) **EP 2 051 222 A1**
(43) Date of publication of application: **22.04.2009**
(21) Application number: 07020296.5
(22) Date of filing: 17.10.2007
(51) Int. Cl.: G08G 1/0962, G09F 27/00, H04N 5/44

(54) **Method and system for providing a visual information of a remote location to a user of a vehicle**

(71) Applicant: Harman Becker Automotive Systems GmbH, 76307 Karlsbad (DE)
(72) Inventor: Wlotzka, Paul, 72622 Nürtingen (DE)
(74) Representative: Bertsch, Florian Oliver

(57) **Abstract**

A method for providing a visual information of a remote location to a user of a vehicle comprises a determining of a position information of the remote location from which the visual information is to be provided to the user, a determining of a resource (20-22) using the position information, a requesting of the visual information from the determined resource (20-22), and a transmission of the visual information from the resource (20-22) to the user and a displaying of the visual information to the user.

## Description

This invention relates to a method and a system for providing a visual information of a remote location to a user of a vehicle.

### Related Art

Traffic information is an important information for a user of a vehicle when planning a trip or a route. The traffic information provided currently mainly comprises information about traffic interferences due to congestions or stagnant traffic, the length of the congestion, and sometimes the reason for the congestion, for example an accident or roadwork. This traffic information is usually transmitted either as audible information via a traffic information broadcast receivable by a car radio system or as digitally encoded information radio broadcast for reception by a navigation device of the vehicle. Nevertheless, this information is not always up to date and therefore a user of a vehicle planning a trip sometimes is not sure if it is worth to redirect the trip due to the provided traffic information. Furthermore, the user of a vehicle may be interested in information concerning the road conditions which are currently not provided by the traffic information. For example, in winter, when snow is predicted for a certain area the user of a vehicle is planning to travel through, the user of the vehicle may be interested if there is snow on the road or not, even when there is no traffic interference.

### Summary

Therefore, to help the user of the vehicle to get an idea of the traffic situation at a remote location, there is a need for providing additional and reliable information of a remote location to the user of the vehicle.

According to the invention, this need is met by a method for providing a visual information of a remote location to a user of a vehicle as defined in claim 1, and a system for providing a visual information of a remote location to a user of a vehicle as defined in claim 15. The dependent claims define preferred and advantageous embodiments of the invention.

According to an aspect of the invention, a method for providing a visual information of a remote location to a user of a vehicle is provided. The method comprises the following steps. A position information of the remote location from which the visual information is to be provided to the user is determined. The position information is used to determine a resource which provides the visual information of the remote location. Then, the visual information is requested from the determined resource, and the visual information is transmitted from the determined resource to the user and displayed to the user.

This method allows the user of the vehicle to get reliable information of the remote location the user wants to travel along and therefore provides a reliable basis for planning a route or a trip with the vehicle.

The resource may provide the visual information together with a position information of the visual information, for example in the form of geographical data indicating longitude information and latitude information, for example as a text displayed in the visual information in the form of digital data provided with the digital data of a picture. Furthermore, the resource may provide the visual information together with a time information indicating the time and date of a detection of the visual information. Providing the position information and the time information together with the visual information helps to increase the confidence of the user in the visual information displayed to be detected at the desired location and to be up to date. Furthermore, the visual information can be archived together with the position information and the time information and being requested later on by a user who is mainly not interested in an up to date information but in a visual information about the remote location in general, for example when he is planning a sightseeing trip to the location.

According to an embodiment of the present invention the visual information can be detected by the resource in response to a request of the visual information, or the visual information can be detected by the resource continuously and the detected visual information is then stored in the resource. Detecting the visual information in response to a request guarantees an up to date information presented in the visual information. Detecting the visual information continuously and storing the visual information may be used advantageously in the followings ways: first, in case currently no resource is able to detect an up to date information, a former visual information of the remote location can be provided being as up to date as possible, and, second, historical information can be provided which may be used for analyzing traffic information, analyzing an accident or providing sightseeing information of the remote location.

According to another embodiment, the resource may be comprised in another vehicle, a mobile navigation device, a mobile phone, and/or a traffic monitoring equipment. When provided in another vehicle, the resource may be used in combination with a camera of a driver assistance system of the vehicle and therefore it does not require additional effort and costs. When the resource is comprised in a mobile navigation device, the above-described position information provided together with the visual information can be easily determined by the mobile navigation device. Furthermore, if the resource is comprised in a mobile navigation device having a camera, the mobile navigation device can be used for taking pictures which can be archived in the resource together with the position information and therefore the pictures can be easily associated to a remote location. When the resource is comprised in a mobile phone having a camera, the resource can detect the visual information of the remote location with the camera of the mobile phone and transmit the visual information in response to a request received via the radio transmission capabilities of the mobile phone to the requesting user. Therefore, when integrated in a mobile phone, providing a visual information of a remote location to a user of a vehicle can be implemented with very low additional costs in a mobile phone. When comprised in a traffic monitoring equipment which may be located for example on a bridge over a road or at a crossing, the resource may use the camera of the traffic monitoring equipment for detecting the visual information of the remote location and may use the data communication infrastructure of the traffic monitoring equipment for receiving requests for visual information and for transmitting the visual information to a requestor. Additionally, the resource may use a camera of a helicopter of the police or an automobile club, or may use a camera of a toll collect system installed near a road. Therefore, the method for providing the visual information of a remote location can be easily integrated into a traffic monitoring equipment with low additional costs.

The remote location may be located on a user's route to a predetermined destination. When the user has planned a route to a predetermined destination, for example with the help of a mobile navigation device, there may be one or more remote locations of which the user is interested in visual information, for example due to traffic information heard in the radio or due to weather information read in a newspaper or heard in the radio. In order to get an idea if it is advantageous for the user to circumnavigate this remote location, it is advantageous for the user to retrieve a visual information of the remote location located on or nearby the user's route.

According to an embodiment of the present invention, the step of requesting the visual information comprises the step of transmitting the request to a server of a data transmission network. The server determines a resource which is located within a predetermined distance to the remote location from which the visual information is requested. Such an embodiment simplifies the determination of a resource providing the visual information of the remote location. The server of the data transmission network keeps track of the resources providing the visual information of the remote locations and a user requesting a visual information of a remote location puts this request to the server only and the server then forwards the request to the resource nearest to the requested remote location. The requested visual information can then either be transmitted from the determined resources to the server and then transmitted from the server to the user, or directly transmitted from the determined resources to the user. However, the resource can be directly determined without the use of a server and the request can also be directly transmitted to the resource without the use of a server.

According to an embodiment of the invention, the resources able to provide the visual information for a predetermined remote location are displayed for example on a map of a navigation device to the user. Then the user can select at least one of the resources from which the visual information is to be provided, and then the visual information of the at least one selected resource is displayed to the user. This embodiment provides an implementation of the present invention that is very easy to use, especially if the display of a navigation device of the vehicle is used. When the user of the vehicle plans a trip or route with the help of the navigation device, the navigation device immediately shows all the locations where resources are available that are able to provide the visual information of the remote locations. Additionally, the navigation device may display congestions on the route based on the information received via a traffic message channel (TMC). The user then simply selects one of the displayed resources located near the congestion and decides based on the visual information of the remote location received from the resource if it is necessary to circumnavigate the congestion or not. In the same way the user of the vehicle can check for weather conditions of parts of the route planned on the navigation device.

The visual information may comprise a still image or a video stream. Still images, especially if they are compressed, can be easily and fast transmitted via a wireless transmission network, as only small data volumes have to be transmitted. If data communication channels having a large bandwidth are available, the visual information may comprise video streams which provide the user of the vehicle with a more accurate information about the remote location, for example about the current traffic flow in a congestion.

According to another aspect of the present invention a system for providing visual information of a remote location to a user of a vehicle is provided. The system comprises at the remote location. Furthermore, the system comprises at least one resource providing visual information of the remote location, an input unit, a resource determining unit, a transmitting/receiving unit and a display. Using the input unit, the user selects a remote location for which the visual information is to be requested and inputs a request for the visual information. The resource determining unit determines the resource or the resources being able to provide the requested visual information on the basis of a positioning information of the remote location. The transmitting/receiving unit transmits the visual information from the resource to the user and the display displays the requested visual information to the user.

The resource may comprise a sensor generating video data of the remote location. The video data may comprise still images or a video stream. The resource may be located on a vehicle, a traffic monitoring equipment, a mobile phone, a mobile navigation device, or may be carried around by a person as an individual mobile device. Therefore, a lot of resources can be provided near the remote location of which the visual information is to be provided to the user, and therefore the user is able to select from a variety of resources to get the information he is interested in.

The input unit may be part of a navigation device of the vehicle. Furthermore, the display may be configured to show the resources for a selection by the user. The display may also be part of the navigation device of the vehicle. By integrating the input unit and the display into the navigation device, the cost for the system can be reduced by sharing the input unit and the display with the navigation device, and selection of a remote location by the user is simplified by selecting the desired remote locations on the display displaying the route determined by the navigation device.

As already stated above, the resource may be adapted to determine time information and to transmit the visual information together with the time information to the user. Furthermore, the resource may comprise a position determining unit and may be adapted to transmit the visual information together with a position information determined by the position determining unit.

According to an embodiment the system comprises a server in a data transmission network. The network enables a communication between the resource and the server, between the resource and the user, and/or between the user and the resource. The resource may comprise a position determining unit and transmits the position information of the position determining unit to the server. With the help of the position information received from the resource, the server determines on the basis of a position information of the remote location the resource which is able to provide the requested visual information of a remote location. Additionally or alternatively, the resource may be coupled to the data transmission network via a base station connected to the data transmission network. When the resource is comprised in a mobile phone or comprised in a navigation device connectable to a cellular communication system, the base station may be a base station of the wireless cellular communication network. In this case the server determines the position information of the resource via the predetermined position information of the base station. Although in this case the position information does not provide an accuracy as high as a position information provided by a global positioning system, for example a GPS system, this position information is available at very low cost, especially if the resource is comprised in a mobile phone.

According to an embodiment of the present invention, the resource comprises an input unit allowing to request a provision of the visual information of the surrounding of the resource, i.e. of the remote location. Upon a request triggered by the input unit of the resource, the visual information is stored in a server of the data transmission network. Alternatively or additionally, the visual information provided upon request may be stored in a memory unit of the resource. Furthermore, the resource may additionally provide and store the visual information continuously in the server and/or the memory unit for a predetermined amount of time. By providing the visual information by the resource upon actuation of the input unit of the resource, a person using the resource, which may be part of a mobile phone or a mobile navigation device, can on his own initiative provide visual information which may be of interest for other people. For example, a person using the resource, driving in a car and recognizing the beginning of a new congestion or the coming up of bad weather, can therefore provide traffic- or weather-related information to other road users much in advance to a usual traffic message channel by simply pressing a corresponding button on the input unit.

The invention will now be described in more detail with reference to the accompanying drawings, in which:
Fig. 1 shows a system for providing a visual information of a remote location to a user of a vehicle according to an embodiment of the present invention;
Fig. 2a shows a navigation device according to an embodiment of the invention comprising an input unit and a display, the display displaying a map indicating resources providing visual information of remote locations;
Fig. 2b shows a navigation device according to an embodiment of the present invention comprising an input unit and a display, the display displaying a requested visual information of a remote location;
Fig. 3 shows flow charts of procedures performed in the resource, the server and the vehicle, according to an embodiment of the present invention;
Fig. 4 shows flow charts showing procedures performed in the resource, the server and the vehicle, according to another embodiment of the present invention;
Fig. 5 shows flow charts showing procedures performed in the resource, the server and the vehicle, according to yet another embodiment of the present invention.

Hereinafter, embodiments of the invention will be described in more detail with reference to the drawings.

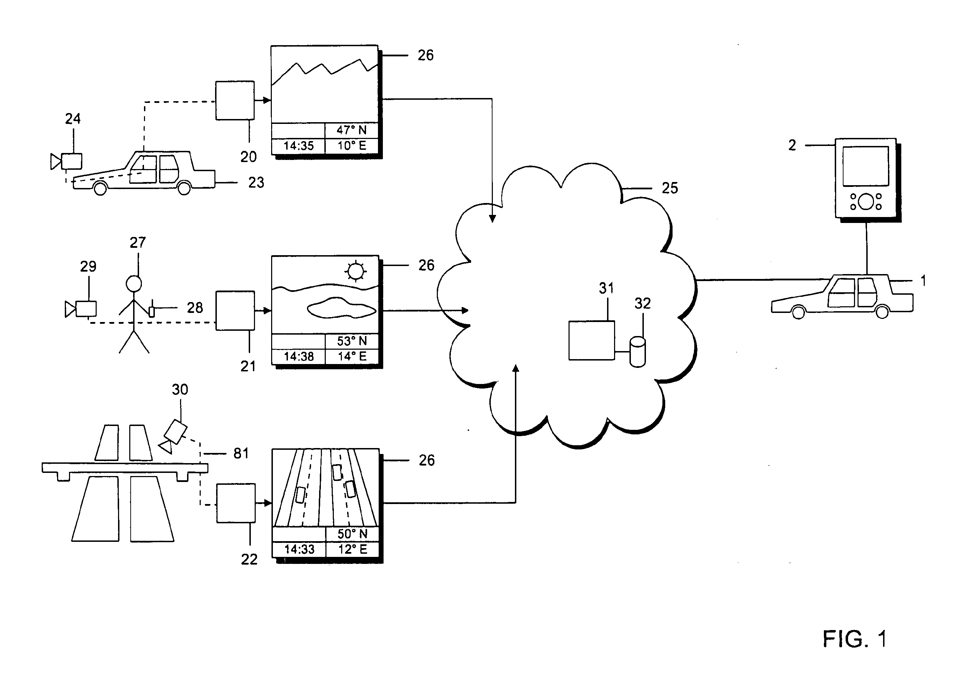

Fig. 1 shows an embodiment of a system for providing a visual information of a remote location to the user of a vehicle 1. The user of vehicle 1 is planning a trip with the help of navigation device 2. After having input intermediate and final destinations into the navigation device 2, the navigation device calculates a route to the desired destinations taking into account information received via a traffic message channel (TMC) avoiding to guide the user via roads where congestions are present.

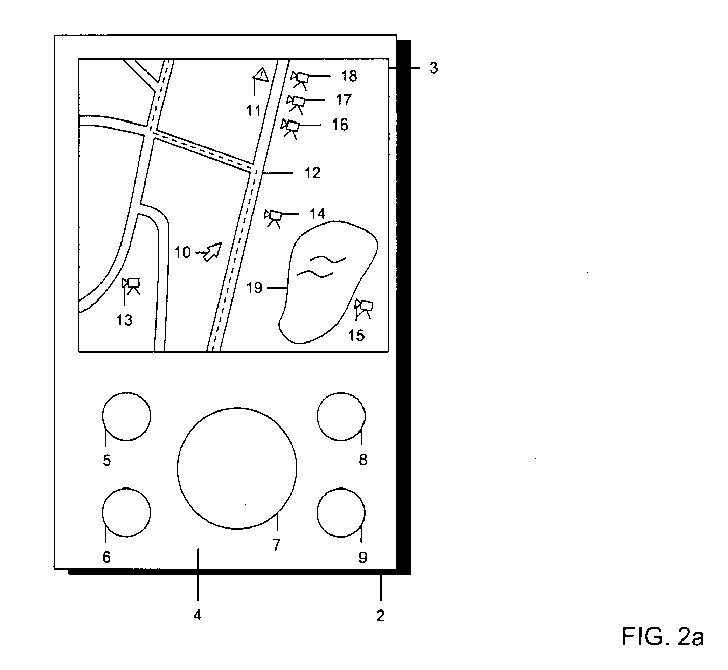

Fig. 2a shows an enlarged view of the navigation device 2. The navigation device 2 comprises a display 3 and an input unit 4. The input unit 4 comprises several control keys 5-9 for moving a pointer 10 displayed on the display 3 and for controlling and operating functions of the navigation device 2. Although not shown, input unit 4 may comprise any other haptic or optical input means, e.g. a touch screen integrated in display 3, a touch pad, a camera recognizing gestures of a user using the navigation device 2, or an eye tracking system recognizing the movements of the eyes of the user using the navigation system 2. On the display 3 of the navigation device 2 shown in Fig. 2a a map is displayed. The map shows a part of the route proposed by the navigation device 2. As the navigation device 2 determined a congestion on the shortest path to the destination, the navigation device calculated a route circumnavigating the congestion. The congestion is displayed by the warning sign 11 in Fig. 2a. The calculated route circumnavigating the congestion is shown by the dashed line in Fig. 2a. As can be seen, the navigation device 2 calculated a route which turns to the left at point 12 to avoid the user to run into the congestion indicated by warning sign 11. The planned traveling direction is assumed to be from the bottom to the top in Fig. 2a.

On the display 3 of the mobile device 2 additionally camera symbols 13-18 are displayed. These camera symbols indicate locations of which a visual information is available. These locations will in the following be called remote locations, as they are remote locations in view of the user of vehicle 1. The user of vehicle 1 may now select with the help of input unit 4 and the pointer 10 camera symbol 14 and receives in response to this selection an image of a road section in front of point 12. With this information the user of vehicle 1 is able to check if the congestion indicated by warning sign 11 is currently really on the road section behind point 12 only, or if the congestion is already longer than predicted by the TMC and interferes already the traffic on the road section before point 12. Then the user of vehicle 1 can additionally request visual information of the remote locations indicated by camera signs 16-18. With the help of this visual information the user can determine if the congestion notified by the TMC is really still existing, or if the traffic is already starting to flow or determine the reason for the congestion, for example if there was an accident and if still one or more lanes are blocked due to this accident. With the help of the visual information of the remote locations the user of the vehicle 1 is now able to decide if he should follow the circumnavigation or drive straight ahead at point 12 assuming that the congestion does not exist any more when reaching this section of the road.

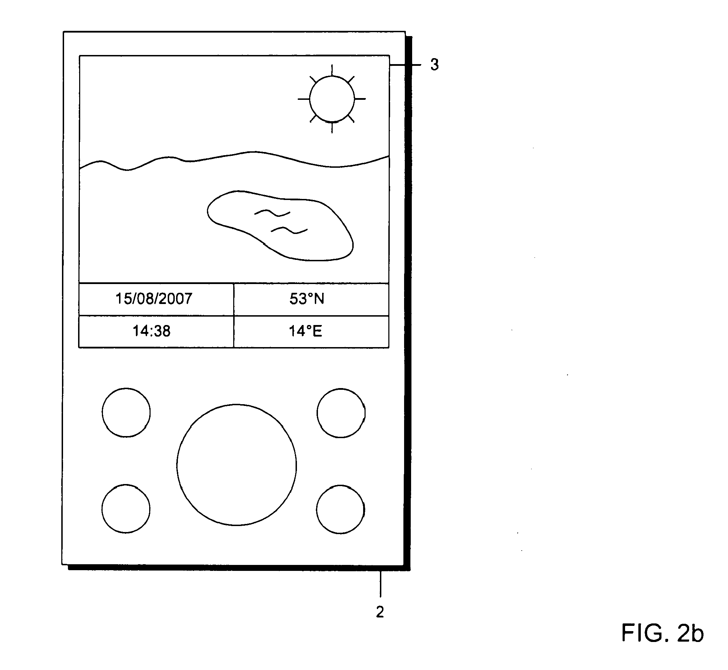

Furthermore, the user of vehicle 1 may decide to make a break at lake 19, hoping that the congestion will not exist any more after the break. Therefore, the user selects camera symbol 15 to receive a visual information of the remote location near the lake 19 to check if the weather and the area near the lake is convenient for a break. Fig. 2b shows the navigation device 2, wherein an image of the remote location near the lake 19 is displayed after having selected camera symbol 15 shown in Fig. 2a. Additionally to the visual information of the lake displayed on display 3 of the navigation device 2, a position information showing the longitude and latitude of the position from which the visual information was captured and a time and date information indicating the time and date, when the visual information was captured, are provided. Alternatively, the visual information may be displayed with the position information only, with the time and date information only, or without any further information.

In the following referring to Fig. 1 the system for providing a visual information of a remote location will be described in more detail. The system comprises several resources 20-22 providing visual information of remote locations. Such a resource may for example be comprised in a vehicle 23, a mobile navigation device 28, a mobile phone 28 or a traffic monitoring equipment 81.

As shown in Fig. 1, a resource 20 is comprised in a vehicle 23 comprising a camera 24. The camera 24 may be part of a driver assistance system of the vehicle 23 or may be exclusively designated for use with the resource 20. The resource 20 is adapted to receive visual information captured by the camera 24 and to transmit the visual information to a data transmission network 25 via a transmitting/receiving unit of the resource. Additionally, the resource 20 may be adapted to store the visual information received from the camera 24 inside the resource in a memory unit of the resource and transmit the visual information on a request received by the transmitting/receiving unit of the resource to the data transmission network 25. The resource 20 may store continuously, in predetermined intervals, or on request the received visual information. The period length of the predetermined intervals may be configurable by a user of the vehicle. The visual information may be stored in memory unit, wherein old visual information is automatically removed from the memory. The visual information captured by the camera 24 may comprise still images or a video stream. The resource is additionally adapted to determine a position information of the resource 20 with a position determining unit of the resource, for example using a global positioning system (GPS), and to determine the current date and time and to store and transmit this position and time and date information together with the visual information 26.

The resource may also be comprised or incorporated into a mobile device 28, for example a mobile phone or a mobile navigation device. As shown in Fig. 1, a user 27 carrying a mobile device 28 comprising the resource 21 may take a picture or record a video stream at a certain location with the mobile device 28 comprising camera 29. The user 27 may then decide to publish the captured visual information by activating a publishing function of the mobile device 28, and in response to this, the resource 21 stores the visual information together with a position information and a time and date information for being requested in a memory unit of the resource later on, or directly transmits the visual information together with the position information and the time and date information to the data transmission network 25.

Additionally or as an alternative, the position information can be added to the visual information by a base station of the data transmission network 25 receiving the visual information from the resource 20, 21.

As shown in Fig. 1, the visual information may be provided by a traffic monitoring equipment 81 comprising a camera 30 and a resource 22. The traffic monitoring equipment 81 may be provided on a bridge monitoring the traffic on a section of a road running underneath the bridge. The resource 22 may provide either continuously or on request visual information 26 together with a position information and a time and date information to the data transmission network 25.

The data transmission network 25 may comprise any kind of wireless and wire-based data transmission means and corresponding routers and hubs to provide the data communication between the resources 20-22 and the navigation device 2 of the user of vehicle 1. The data transmission network 25 may additionally comprise a server 31 comprising a database 32. The server 31 is adapted to store visual information 26 received from the resources 20-22 and to transmit the visual information 26 to the navigation device 2. Furthermore, the server is adapted to keep track of the position of the resources 20-22, for example by analyzing the visual information containing position information of the resource 20-22, by determining the position information of a base station providing contact to the resource 20-22, or by receiving a position information of the resource 20-22 sent by the resource 20-22 to the server. Finally, the server is adapted to transmit the visual information 26 received from the resources 20-22 to the navigation device 2 in response to a request from the navigation device 2, and to provide the position information of the resources 20-22 to the navigation device 2, for displaying the location of the resource 20-22 on the navigation device 2.

The server 31 may be adapted to store the visual information received from the resources 20-22 in a data base 32 of the server 31, wherein old visual information may be automatically removed from the data base 32.

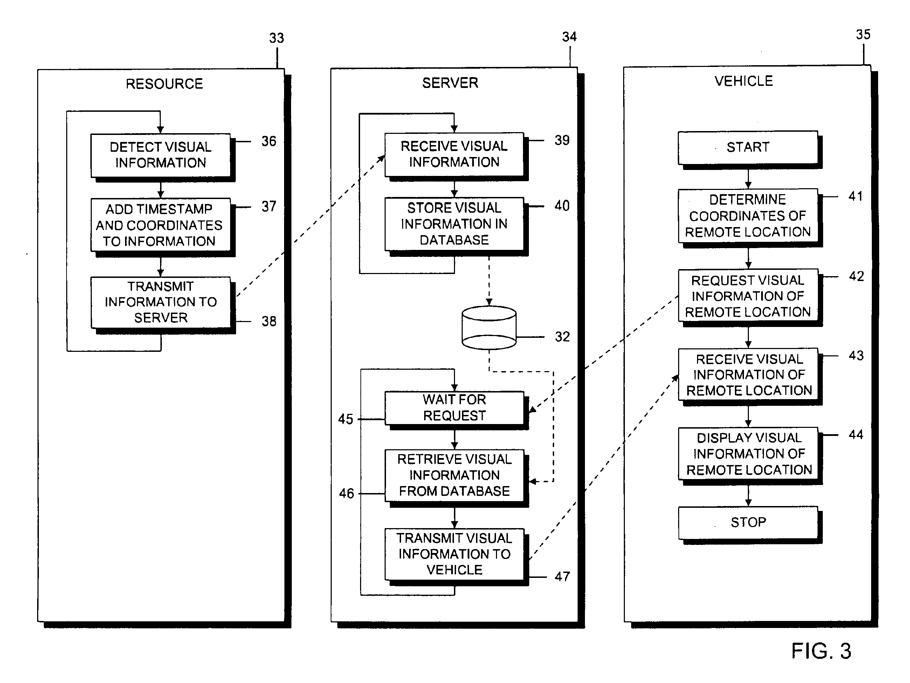

Fig. 3 shows an embodiment of the invention in the form of flowcharts describing the actions to be performed on the resource 20-22, the server 31 and the vehicle 1 and the interaction between the resource 20-22, the server 31 and the vehicle 1.

The actions performed in the resource 20-22 are depicted in the resource block 33, the actions performed in the server 31 are depicted in the server block 34, and the actions performed in the vehicle 1 or in the navigation device 1 of the vehicle 1 are depicted in the vehicle block 35. Data flows between the blocks are indicated by arrows having dashed lines.

According to this embodiment, the resource is continuously detecting visual information (block 36), adding time stamp and position information to the visual information (block 37), and transmitting the combined information to the server (block 38) of the data transmission network. The resources continuously detecting and providing visual information is, for example, a resource 20 comprised in a vehicle 23 or a resource 22 of a traffic monitoring equipment 81 as shown in Fig. 1. As shown in the server 31 block 34 of Fig. 3, the server of the data transmission network 25 receives the visual information (block 39) continuously and stores the received visual information (block 40) in a database 32. As shown in the vehicle block 35 in Fig. 3, the user of vehicle 1, after having planned a trip with the help of the navigation device 2, determines coordinates of remote locations (block 41) with the help of navigation device 2, for example as already explained in combination with Fig. 2a. Then the navigation device 2 sends a request for visual information of the remote location (block 42) via the data transmission network 25 to the server 31. The server 31, waiting for a request from the vehicle 1, receives the request (block 45) and retrieves the requested visual information from the database 32 (block 46) using the coordinates of the remote location that has been sent together with the request for visual information from the vehicle. Then the server 31 transmits the visual information retrieved from the database 32 to the navigation device 2 of the vehicle 1 (block 47) and is then ready to receive the next request. In the vehicle 1 the navigation device 2 receives the visual information of the remote location (block 43) from the server 31 and displays the visual information of the remote location (block 44) to the user of the vehicle 1. As described above, the user may then decide with the help of the visual information to change the route accordingly.

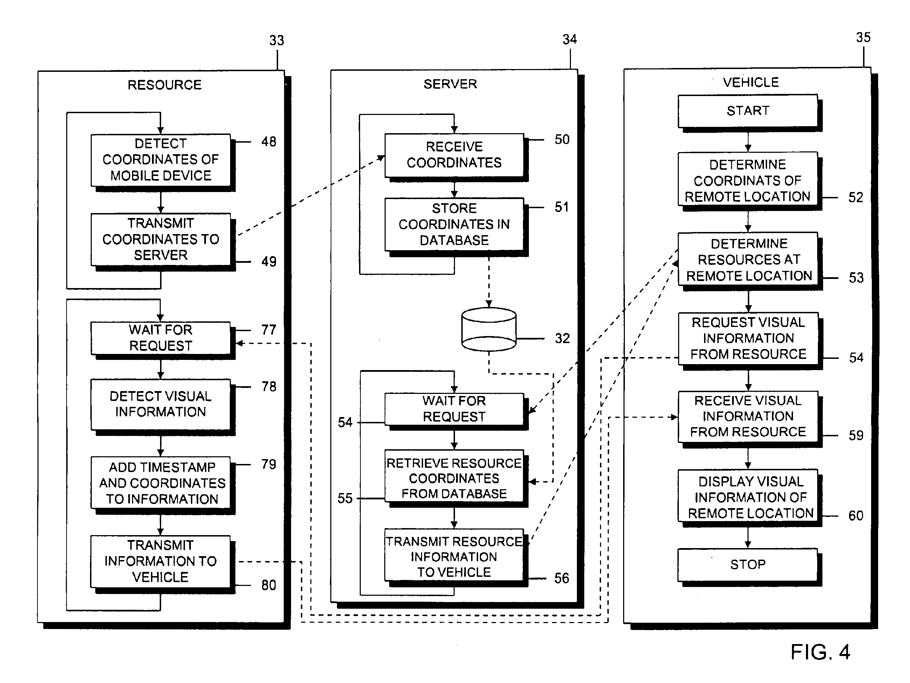

Fig. 4 shows in the form of a flowchart the actions performed in the resource 20-22, the server 31 and the vehicle 1 according to another embodiment of the present invention.

According to this embodiment, the resource 20-22 continuously detects the position information (coordinates) of the resource (block 48) and continuously transmits the coordinates to the server (block 49). The resource may be comprised in a driving assistance system in a vehicle or in a mobile device, such as a mobile phone or a mobile navigation device. As shown in the server block 34, the server 31 continuously receives the coordinates from the resource (block 50) and stores the received coordinates in a database 32 (block 51).

As shown in the vehicle block 35, coordinates of a remote location are determined (block 52). This may be accomplished for example by a user of a vehicle as described in combination with Fig. 2a. First, the user plans a trip with the help of the navigation device 2. Then, after the trip has been calculated by the navigation device 2, the navigation device 2 requests coordinates of resources located near or within a certain range to the calculated route for the trip from the server. The locations of the available resources are then displayed on a display of the navigation device in combination with the map information as shown in Fig. 2a. Then the user selects one of the resources with the help of a pointing device 10 and an input unit 4 of the navigation device 2 and thus the coordinates of the remote location are determined. As an alternative, the user of the vehicle 1 may select any point in the map displayed on the navigation device 2 to request a visual information of that selected remote location. In either cases the navigation device 2 determines the resource at the desired remote location by sending a request containing the coordinates of the desired remote location to a server (block 53). In return, the server which was waiting for the request (block 54) retrieves a resource matching the coordinates of the desired remote location from the database 32 (block 55). In case no exact match of the coordinates can be found, a resource within a certain predetermined range is selected as the resource matching best to the desired coordinates. Then the server transmits the resource access information, for example an IP address or a telephone number adapted to get into contact with the resource, to the vehicle (block 56). The navigation device 2 of the vehicle then uses the resource access information received from the server to request a visual information from this resource (block 54). Upon receiving the request from the navigation device 2, the resource, which was waiting for the request (block 77) detects the visual information of the surrounding of the resource (block 78) and adds a time stamp and position information to the visual information (block 79). Finally, the resource transmits the visual information together with the time stamp and position information to the vehicle (block 80). The navigation device 2 of the vehicle 1 receives the visual information from the selected resource (block 59) and displays the visual information of the remote location to the user (block 60).

When requesting a visual information of a remote location, the request may additionally comprise information specifying a kind of desired visual information, e.g. visual information comprising road views only, or visual information comprising service areas only, or visual information comprising certain points of interest only. By restricting the kind of desired visual information, e.g. a user who is interested in the current state of a congestion can restrict the kind of visual information to road views and gets in return visual information comprising road views only instead of visual information comprising non road views, like e.g. a view of a lake or another point of interest near the requested remote location.

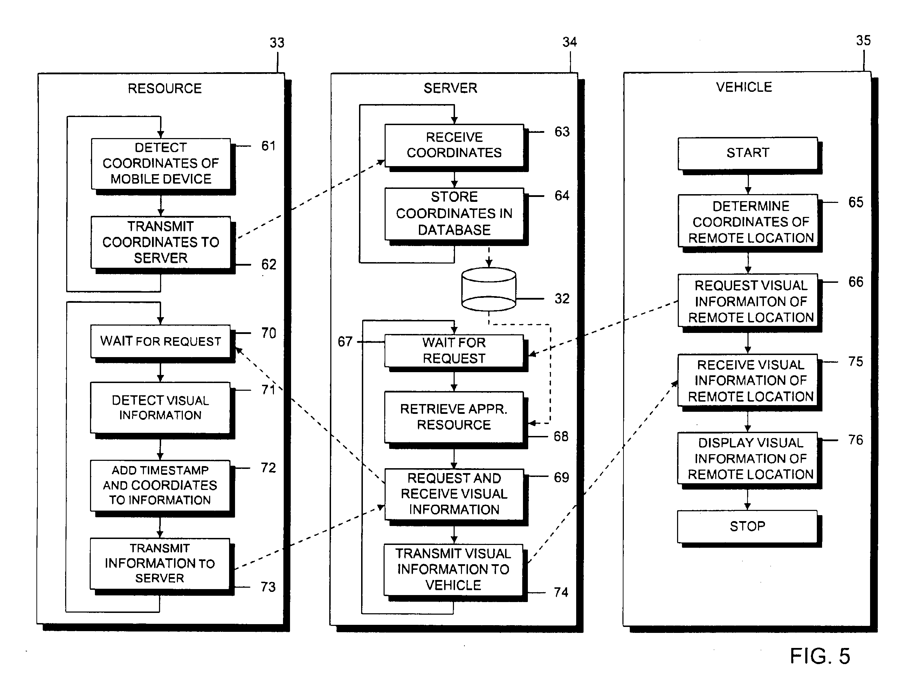

Fig. 5 shows flowcharts of yet another embodiment of the present invention. As shown in the resource block 33, the resource continuously detects the coordinates of the resource (block 61) which may be comprised in a mobile device 28 or a vehicle 23. The current coordinates or position information are transmitted to a server of the data transmission network (block 62). The server receives the coordinates (block 63) and stores the coordinates in a database 32 (block 64). In the vehicle, as shown in the vehicle block 35, after coordinates of a desired remote location have been determined (block 65) as described above, a request for visual information of a remote location are sent from the navigation device 2 of the vehicle 1 to the server (block 66). The server, which was waiting for the request from the navigation device (block 67) retrieves in response to the request using the coordinates of the remote location an appropriate resource for providing the requested visual information of the remote location from the database 32 (block 68). Then the server requests a visual information from the selected resource (block 69). In return to this request, the resource detects the visual information (block 71), adds a time stamp and position information to the visual information (block 72) and transmits the requested visual information to the server (block 73). After having received the visual information from the resource (block 69), the server transmits the visual information to the vehicle (block 74). Finally, in the vehicle the navigation device 2 receives the visual information of the remote location from the server (block 75) and displays the visual information to the user (block 76).

While exemplary embodiments have been described above, various modifications may be implemented in other embodiments. For example, the visual information may comprise not only still image information, but also video streams of the surrounding at the remote location. Furthermore, a user who is using a mobile device outside a vehicle, for example a mobile navigation device or a mobile phone, can request in the same way visual information of a remote location.

The resource, which may be provided in a mobile device, such as a mobile navigation device, or a mobile phone, or in a vehicle, may provide a special function activated for example via a certain key or a soft key for generating a visual information and transmitting this visual information to a predetermined destination. This may for example be used in the event of an accident, where a person near the accident takes one or more pictures of the accident and transmits these pictures with the help of this special function directly to the police or a rescue center to provide detailed information about the situation at the scene of the accident and additionally the exact position information of the accident.

When the resource is part of a vehicle, for example part of a driving assistance system, pictures can be recorded continuously together with the time and position information to be used in the event of an accident of the vehicle to reconstruct and analyze the accident.

Furthermore, the navigation device 2 of the vehicle 1 may be removable from the vehicle 1 and usable outside the vehicle. The navigation device 2 may additionally comprise a camera and may therefore be used during holidays or a journey for taking pictures or video streams of places of interest which may then be sent together with the position information to a server in the data transmission network where this visual information is stored. This visual information may be requested by other persons who are interested in traveling to this location such that a tourist guide book is set up by this in the server of the data transmission network.

The visual information may additionally be provided with some lines of text describing the content or some more details about the location or place depicted in the visual information. As an example, this visual information may comprise a photo of a restaurant and additionally some information about the meals the person taking the picture recommends. As the visual information is stored in the server together with the position information, a time and date information and possibly such a recommendation, another person retrieving this information from the server can easily program a navigation device to navigate to this location and gets an impression of the site and the restaurant in advance.

As the navigation device described above, which is removable from the vehicle 1, is charged by the vehicle when attached to the vehicle, the navigation device, which may also be used as a digital camera as described above, can be easily charged during a journey without providing a separate charger and without searching for a matching power supply line.

Finally, instead of communicating via a data communication network, the navigation device and the resource may communicate directly. The navigation device may e.g. broadcast a request for visual information via e.g. a predetermined frequency or channel to all resources within the reach of the transmitter of the navigation device. A resource receiving this request evaluates this request and, in case the resource can provide the requested visual information, responds to this request by sending the requested visual information directly to the navigation system. To avoid collisions when transmitting and responding to the request, any known collision detection protocol for wireless communication can be used.

## Claims

1. A method for providing a visual information (26) of a remote location to a user of a vehicle (1), the method comprises the steps of:
- determining a position information of the remote location from which the visual information (26) is to be provided to the user,
- determining a resource (20-22) using the position information, said resource (20-22) providing said visual information (26) of said remote location,
- requesting said visual information (26) from the determined resource (20-22), and
- transmitting said visual information (26) from the determined resource (20-22) to the user and displaying said visual information (26) to the user.

2. The method according to claim 1, wherein the resource (20-22) provides the visual information (26) together with a position information of the visual information (26).

3. The method according to claim 1 or claim 2, wherein the resource (20-22) provides the visual information (26) together with a time information indicating the time and date of detection of the visual information (26).

4. The method according to any of the preceding claims, wherein the visual information (26) is detected by the resource (20-22) in response to the requesting said visual information (26).

5. The method according to any of the preceding claims, wherein said visual information (26) is detected by the resource (20-22) continuously and the detected visual information (26) is stored in the resource (20-22).

6. The method according to any of the preceding claims, wherein the resource (20-22) is comprised in another vehicle (23), a mobile navigation device (28), a mobile phone (28), and/or a traffic monitoring equipment (81).

7. The method according to any of the preceding claims, wherein the remote location is located on a user's route to a predetermined destination.

8. The method according to any of the preceding claims, wherein the step of requesting said visual information (26) comprises the step of transmitting the request to a server (31) of a data transmission network (25), the server (31) determining the resources (20-22) located within a predetermined distance to the remote location from which the visual information (26) is requested.

9. The method according to claim 8, wherein the determined resources (20-22) transmit the requested visual information (26) to the server (31), the server (31) transmitting the visual information (26) to the user.

10. The method according to any of the preceding claims, wherein the determined resources (20-22) transmit the requested visual information (26) directly to the user.

11. The method according to any of the preceding claims, wherein the visual information (26) allows to determine traffic situation or weather condition at the remote location.

12. The method according to any of the preceding claims, further comprising the step of displaying the resources (20-22; 13-18) able to provide the visual information (26) for a predetermined remote location to the user, the user being able to select at least one of the resources (20-22; 13-18) for which the visual information (26) is to be provided, the visual information (26) of the selected at least one resource (20-22; 13-18) being displayed to the user.

13. The method according to any of the preceding claims, wherein the visual information (26) comprises a still image or a video stream.

14. The method according to any of the preceding claims, wherein the visual information is provided by a camera (24) installed in another vehicle (23), by a camera (30) installed in a traffic monitoring equipment (81), and/or a camera (29) carried by another person (27).

15. A system for providing a visual information (26) of a remote location to a user of a vehicle (1), comprising:
- at least one resource (20-22) providing visual information (26) of the remote location,
- an input unit (4) allowing the selection of a remote location by the user and an input of a request for the visual information (26),
- a resource determining unit (31; 2) determining the resource (20-22) being able to provide the requested visual information (26) on the basis of a position information of the remote location,
- a transmitting/receiving unit (28) transmitting the visual information (26) from the resource (21) to the user, and
- a display (3) displaying the requested visual information (26) to the user.

16. The system according to claim 15, wherein the resource (20-22) comprises a sensor (24, 29, 30) generating video data of the remote location.

17. The system according to claim 15 or 16, wherein the resource (20-22) is located on a vehicle (23), a person (27), or a traffic monitoring equipment (81).

18. The system according to any of claims 15-17, wherein the input unit (4) is part of a navigation device (2) of the vehicle (1).

19. The system according to any of claims 15-18, wherein the display (3) is configured to show resources (20-22; 13-18) for selection by user.

20. The system according to any of claims 15-19, wherein the resource (20-22) determines time information (26) and transmits the visual information together with the time information to user.

21. The system according to any of claims 15-20, wherein the resource (20-22) comprises a position determining unit and transmits the visual information (26) together with a position information (26).

22. The system according to any of claims 15-21, wherein the sensor (24, 29, 30) generates a video stream or a still image.

23. The system according to any of claims 15-22, wherein the system further comprises a server (31) in a data transmission network (25), the network (25) allowing communication between the resource (20-22) and the server (31), between the resource (20-22) and the user, and/or between the user and the resource (20-22).

24. The system according to claim 23, wherein the resource (20-22) comprises a position determining unit and transmits the position information to the server (31).

25. The system according to claim 23 or 24, wherein the resource (20-22) is coupled to the data transmission network (25) via a base station connected to the data transmission network (25), the server (31) determining the position information of the resource (20-22) via the predetermined position information of the base station.

26. The system according to any of claims 23-25, wherein the resource (20-22) comprises an input unit allowing to request a provision of the visual information (26) of the remote location, the visual information (26) being stored in the server (31) in the data transmission network (25).

27. The system according to any of claims 15-26, wherein the resource (20-22) comprises an input unit allowing to request a provision of the visual information (26) of the remote location and a memory unit, the visual information (26) being stored in the memory unit.

28. The system according to any of claims 15-27, wherein the resource (20-22) continuously provides visual information (26) of the remote location and the resource (20-22) comprises a memory unit storing the continuously provided visual information (26) for a predetermined amount of time.
